# EUROPEAN PATENT APPLICATION

(11) **EP 4 507 376 A1**
(43) Date of publication of application: **12.02.2025**
(21) Application number: 22936208.2
(22) Date of filing: 08.04.2022
(51) Int. Cl.: H04W 36/00

(54) **UPDATE METHOD AND APPARATUS FOR CELL GROUPS OF TERMINAL DEVICE IN DUAL CONNECTIVITY**

(71) Applicant: Beijing Xiaomi Mobile Software Co., Ltd., Beijing 100085 (CN)
(72) Inventor: XIONG, Yi, Beijing 100085 (CN); WU, Yumin, Beijing 100085 (CN)
(74) Representative: Dehns Germany Partnerschaft mbB
(86) International application number: PCT/CN2022/085968
(87) International publication number: WO 2023/193271

(57) **Abstract**

Disclosed in embodiments of the present invention is an update method for cell groups of a terminal device in dual connectivity, which is applied to the technical field of communications. A method performed by a source master node MN comprises: sending to one or more target MNs a master cell group (MCG) change request message used for requesting the one or more target MNs to prepare resources for a dual-connectivity terminal device. In this way, by means of negotiation of network nodes, the MCG and an SCG are simultaneously changed or the SCG is added while the MCG is changed, thereby improving the reliability of a mobility process of a terminal.

## Description

### TECHNICAL FIELD

The present disclosure relates to the field of communication technologies, and in particular to a cell group updating method and a cell group updating device for a terminal in dual connectivity.

### BACKGROUND

A terminal in dual connectivity (DC) may access two cell groups, i.e., a master cell group (MCG) and a secondary cell group (SCG). The MCG corresponds to a master node (MN) on a network side, and the SCG corresponds to a secondary node (SN) on the network side.

In current systems, a terminal supporting DC only supports MCG change or SCG change or addition separately, and does not support changing an MCG and an SCG simultaneously, or adding an SCG while changing an MCG, which affects mobility performance of the terminal.

### SUMMARY

Embodiments of the present disclosure provide a cell group updating method and a cell group updating device for a terminal in dual connectivity.

In a first aspect, embodiments of the present disclosure provide a cell group updating method for a terminal in dual connectivity, the method is performed by a source master node, and the method includes:

transmitting a master cell group (MCG) change request message to one or more target MNs, where the MCG change request message is used to request the one or more target MNs to prepare resources for the terminal in dual connectivity.

In the present disclosure, the source MN may transmit, to the one or more target MNs, the master cell group MCG change request message used to request the one or more target MNs to prepare resources for the terminal in dual connectivity. As a result, through negotiation of network nodes, changing an MCG and an SCG simultaneously, or adding an SCG while changing an MCG is achieved, which improves reliability of the mobility process for the terminal.

Optionally, the MCG change request message is a handover request message.

Optionally, after the transmitting the master cell group (MCG) change request message to the one or more target MNs, the method further includes:
receiving a first feedback message transmitted by the one or more target MNs.

Optionally, the first feedback message is used to indicate any one of the following: MCG change preparation success, or MCG change preparation failure.

Optionally, after the transmitting the master cell group (MCG) change request message to the one or more target MNs, the method further includes:
receiving a second feedback message carrying feedback information about secondary cell group (SCG) updating.

Optionally, the SCG updating includes at least one of the following:
SCG change, or SCG addition.

Optionally, the second feedback message is used to indicate at least one of the following:
MCG change preparation success, MCG change preparation failure, SCG change and/or addition preparation success, or, SCG change and/or addition preparation failure.

Optionally, each of the first feedback message and the second feedback message is any one of the following: a handover request acknowledgement message, or a handover request failure message.

In a second aspect, embodiments of the present disclosure provide a cell group updating method for a terminal in dual connectivity, the method is performed by a target master node MN, and the method includes:
receiving a master cell group (MCG) change request message transmitted by a source MN, where the MCG change request message is used to request the target master node to prepare resources for the terminal in dual connectivity.

In the present disclosure, the target MN may receive the master cell group MCG change request message transmitted by the source MN, where the master cell group MCG change request message is used to request the target MN to prepare resources for the terminal in dual connectivity. As a result, through negotiation of network nodes, changing an MCG and an SCG simultaneously, or adding an SCG while changing an MCG is achieved, which improves reliability of the mobility process for the terminal.

Optionally, the MCG change request message is a handover request message.

Optionally, after the receiving the master cell group (MCG) change request message transmitted by the source MN, the method further includes:
transmitting a first feedback message to the source MN.

Optionally, the first feedback message is used to indicate any one of the following: MCG change preparation success, or MCG change preparation failure.

Optionally, after the receiving the master cell group (MCG) change request message transmitted by the source MN, the method further includes:
initiating a secondary cell group (SCG) updating process; and/or,
transmitting a secondary cell group (SCG) change request message and/or an SCG addition request message to one or more target secondary nodes (SN).

Optionally, the SCG change request is any one of the following: a secondary node (SN) addition request message, or an SN modification request message; and
the SCG addition request is any one of the following: an SN addition request message.

Optionally, the method also includes:
receiving an SCG change feedback message and/or an SCG addition feedback message transmitted by the one or more target SNs.

Optionally, the SCG change feedback message includes any one of the following: an SN addition request acknowledgement message, an SN modification request acknowledgement message, an SN addition request rejection message, or an SN modification request rejection message; and
the SCG addition feedback message includes any of the following: an SN addition request acknowledgement message, or an SN addition request rejection message.

Optionally, after the receiving the SCG change feedback message and/or the SCG addition feedback message transmitted by the one or more target SNs, the method further includes:
transmitting a second feedback message carrying feedback information about SCG updating to the source MN.

Optionally, the second feedback message is used to indicate at least one of the following: MCG change preparation success, MCG change preparation failure, SCG change and/or addition preparation success, or, SCG change and/or addition preparation failure.

Optionally, the method also includes:
determining an MCG based on the MCG change request message; or,
determining an MCG based on an implementation algorithm of the target MN.

Optionally, the method also includes:
transmitting a data forwarding address to a source secondary node (SN) and/or the target SN.

In a third aspect, embodiments of the present disclosure provide a cell group updating method for a terminal in dual connectivity, the method is performed by a target secondary node SN, and the method includes:
receiving a secondary cell group (SCG) change request message and/or an SCG addition request message transmitted by a target master node (MN).

In the present disclosure, the target SN may receive the SCG change request message and/or the SCG addition request message transmitted by the target MN, and then determine the SCG based on the SCG change request message and/or the SCG addition request message. As a result, changing an MCG and an SCG simultaneously, or adding an SCG while changing an MCG is achieved, which improves reliability of the mobility process for the terminal.

Optionally, the SCG change request is any one of the following: a secondary node (SN) addition request message, or an SN modification request message; and
the SCG addition request is any one of the following: an SN addition request message.

Optionally, the method also includes:
transmitting an SCG change feedback message and/or an SCG addition feedback message to the target MN.

Optionally, the SCG change feedback message includes any one of the following: an SN addition request acknowledgement message, an SN modification request acknowledgement message, an SN addition request rejection message, or an SN modification request rejection message; and
the SCG addition feedback message includes any of the following: an SN addition request acknowledgement message, or an SN addition request rejection message.

Optionally, the method also includes:
determining an SCG based on the SCG change request and/or the SCG addition request; or,
determining an SCG based on an implementation algorithm of the target SN.

In a fourth aspect, embodiments of the present disclosure provide a cell group updating method for a terminal in dual connectivity, and the method includes:
transmitting, by a source master node (MN), a master cell group (MCG) change request message to one or more target MNs, where the MCG change request message is used to request the one or more target MNs to prepare resources for the terminal in dual connectivity; and
transmitting, by the one or more target MNs, one or more feedback messages to the source MN.

In the present disclosure, through negotiation among the network nodes, changing an MCG and an SCG simultaneously, or adding an SCG while changing an MCG is achieved, which improves reliability of the mobility process for the terminal.

Optionally, after the transmitting, by the source master node (MN), the master cell group (MCG) change request message to the one or more target MNs, the method further includes:
transmitting, by the target MN, a secondary cell group (SCG) change request message and/or an SCG addition request message to one or more target secondary nodes (SN); and
transmitting, by the one or more target SNs, one or more SCG change feedback messages and/or one or more SCG addition feedback messages to the target MN.

In a fifth aspect, embodiments of the present disclosure provide a communication device, on a source master node side, including:
a transceiver module, configured to transmit a master cell group (MCG) change request message to one or more target MNs, where the MCG change request message is used to request the one or more target MNs to prepare resources for the terminal in dual connectivity.

Optionally, the MCG change request message is a handover request message.

Optionally, the transceiver module is further configured to:
receive one or more first feedback messages transmitted by the one or more target MNs.

Optionally, the first feedback message is used to indicate any one of the following: MCG change preparation success, or MCG change preparation failure.

Optionally, the transceiver module is further configured to:
receive a second feedback message carrying feedback information about secondary cell group (SCG) updating.

Optionally, the SCG updating includes at least one of the following:
SCG change, or SCG addition.

Optionally, the second feedback message is used to indicate at least one of the following:
MCG change preparation success, MCG change preparation failure, SCG change and/or addition preparation success, or, SCG change and/or addition preparation failure.

Optionally, each of the first feedback message and the second feedback message is any one of the following: a handover request acknowledgement message, or a handover request failure message.

In a sixth aspect, embodiments of the present disclosure provide a communication device, on a target master node side, including:
a transceiver module, configured to receive a master cell group (MCG) change request message transmitted by a source MN, where the MCG change request message is used to request the target master node to prepare resources for the terminal in dual connectivity.

Optionally, the MCG change request message is a handover request message

Optionally, the transceiver module is further configured to:
transmit a first feedback message to the source MN.

Optionally, the first feedback message is used to indicate any one of the following: MCG change preparation success, or MCG change preparation failure.

Optionally, the device further includes a processing module configure to:
initiate a secondary cell group (SCG) updating process; and/or,
transmit a secondary cell group (SCG) change request message and/or an SCG addition request message to one or more target secondary nodes (SN).

Optionally, the SCG change request is any one of the following: a secondary node (SN) addition request message, or an SN modification request message; and
the SCG addition request is any one of the following: an SN addition request message.

Optionally, the transceiver module is further configured to:
receive an SCG change feedback message and/or an SCG addition feedback message transmitted by the one or more target SNs.

Optionally, the SCG change feedback message includes any one of the following: an SN addition request acknowledgement message, an SN modification request acknowledgement message, an SN addition request rejection message, or an SN modification request rejection message; and
the SCG addition feedback message includes any of the following: an SN addition request acknowledgement message, or an SN addition request rejection message.

Optionally, the transceiver module is further configured to:
transmit a second feedback message carrying feedback information about SCG updating to the source MN.

Optionally, the second feedback message is used to indicate at least one of the following: MCG change preparation success, MCG change preparation failure, SCG change and/or addition preparation success, or, SCG change and/or addition preparation failure.

Optionally, the processing module is configured used to:
determine an MCG based on the MCG change request message; or,
determine an MCG based on an implementation algorithm of the target MN.

Optionally, the transceiver module is further configured to:
transmit a data forwarding address to a source secondary node (SN) and/or the target SN.

In a seventh aspect, embodiments of the present disclosure provide a communication device, on a target secondary node side, including:
a transceiver module, configured to receive a secondary cell group (SCG) change request message and/or an SCG addition request message transmitted by a target master node (MN).

Optionally, the SCG change request is any one of the following: a secondary node (SN) addition request message, or an SN modification request message; and
the SCG addition request is any one of the following: an SN addition request message.

Optionally, the transceiver module is further configured to:
transmit an SCG change feedback message and/or an SCG addition feedback message to the target MN.

Optionally, the SCG change feedback message includes any one of the following: an SN addition request acknowledgement message, an SN modification request acknowledgement message, an SN addition request rejection message, or an SN modification request rejection message; and
the SCG addition feedback message includes any of the following: an SN addition request acknowledgement message, or an SN addition request rejection message.

Optionally, the device further includes a processing module configured to:
determine an SCG based on the SCG change request and/or the SCG addition request; or,
determine an SCG based on an implementation algorithm of the target SN.

In an eighth aspect, embodiments of the present disclosure provide a communication device, including a processor. When the processor calls a computer program in a memory, the method described in the first aspect is executed.

In a ninth aspect, embodiments of the present disclosure provide a communication device, including a processor. When the processor calls a computer program in a memory, the method described in the second aspect is executed.

In a tenth aspect, embodiments of the present disclosure provide a communication device, including a processor. When the processor calls a computer program in a memory, the method described in the third aspect is executed.

In an eleventh aspect, embodiments of the present disclosure provide a communication device, including a processor and a memory. The memory stores a computer program; the processor is configured to execute the computer program stored in the memory to cause the communication device to perform the method described in the first aspect.

In a twelfth aspect, embodiments of the present disclosure provide a communication device, including a processor and a memory. The memory stores a computer program; the processor is configured to execute the computer program stored in the memory to cause the communication device to perform the method described in the second aspect.

In a thirteenth aspect, embodiments of the present disclosure provide a communication device, including a processor and a memory. The memory stores a computer program; the processor is configured to execute the computer program stored in the memory to cause the communication device to perform the method described in the third aspect.

In a fourteenth aspect, embodiments of the present disclosure provide a communication device, including a processor and an interface circuit. The interface circuit is configured to receive code instructions and transmit them to the processor, and the processor is configured to execute the code instructions to cause the device to perform the method described in the first aspect.

In a fifteenth aspect, embodiments of the present disclosure provide a communication device, including a processor and an interface circuit. The interface circuit is configured to receive code instructions and transmit them to the processor, and the processor is configured to execute the code instructions to cause the device to perform the method described in the second aspect.

In a sixteenth aspect, embodiments of the present disclosure provide a communication device, including a processor and an interface circuit. The interface circuit is configured to receive code instructions and transmit them to the processor, and the processor is configured to execute the code instructions to cause the device to perform the method described in the third aspect.

In a seventeenth aspect, embodiments of the present disclosure provide a cell group updating system for a terminal in dual connectivity, the system includes the communication device described in the fifth aspect, the communication device described in the sixth aspect, and the communication device described in the seventh aspect, or the system includes the communication device described in the eighth aspect, the communication device described in the ninth aspect, and the communication device described in the tenth aspect, or the system includes the communication device described in the eleventh aspect, the communication device described in the twelfth aspect, and the communication device described in the thirteenth aspect, or the system includes the communication device described in the fourteenth aspect, the communication device described in the fifteenth aspect, and the communication device described in the sixteenth aspect.

In an eighteenth aspect, embodiments of the present disclosure provide a computer readable storage medium, configured to store instructions used by the terminal described above. The instructions, when being executed, cause the terminal to perform the method described in the first aspect.

In a nineteenth aspect, embodiments of the present disclosure provide a readable storage medium, configured to store instructions used by the network device described above. The instructions, when being executed, cause the network device to perform the method described in the second aspect.

In a twentieth aspect, embodiments of the present disclosure provide a readable storage medium, configured to store instructions used by the network device described above. The instructions, when being executed, cause the network device to perform the method described in the third aspect.

In a twenty-first aspect, the present disclosure further provides a computer program product including a computer program, which, when executed on a computer, causes the computer to perform the method described in the first aspect.

In a twenty-second aspect, the present disclosure further provides a computer program product including a computer program, which, when executed on a computer, causes the computer to perform the method described in the second aspect.

In a twenty-third aspect, the present disclosure further provides a computer program product including a computer program, which, when executed on a computer, causes the computer to perform the method described in the third aspect.

In a twenty-fourth aspect, the present disclosure provides a chip system including at least one processor and an interface for supporting a terminal to implement the functions involved in the first aspect, for example, determining or processing at least one of data and information involved in the method described above. In a possible design, the chip system also includes a memory, which is configured to store a computer program and data necessary for the terminal. The chip system may be composed of a chip, or may include a chip and other discrete devices.

In a twenty-fifth aspect, the present disclosure provides a chip system, which includes at least one processor and an interface, for supporting a network device to implement the functions involved in the second aspect, for example, determining or processing at least one of data and information involved in the method described above. In a possible design, the chip system also includes a memory, which is configured to store a computer program and data necessary for the network device. The chip system may be composed of a chip, or may include a chip and other discrete devices.

In a twenty-sixth aspect, the present disclosure provides a chip system including at least one processor and an interface, for supporting a network device to implement the functions involved in the third aspect, for example, determining or processing at least one of data and information involved in the method described above. In a possible design, the chip system also includes a memory, which is configured to store a computer program and data necessary for the network device. The chip system may be composed of a chip, or may include a chip and other discrete devices.

In a twenty-seventh aspect, the present disclosure provides a computer program which, when executed on a computer, causes the computer to execute the method described in the first aspect.

In a twenty-eighth aspect, the present disclosure provides a computer program which, when executed on a computer, causes the computer to execute the method described in the second aspect.

**In** a twenty-ninth aspect, the present disclosure provides a computer program which, when executed on a computer, causes the computer to execute the method described in the third aspect.

### BRIEF DESCRIPTION OF THE DRAWINGS

In order to more clearly illustrate the technical solutions in the embodiments or the background of the present disclosure, a description of drawings used in the embodiments or the background of the present disclosure is given below.
FIG. 1 is a schematic diagram of an architecture of a communication system according to embodiments of the present disclosure;
FIG. 2 is a flow chart of a cell group updating method for a terminal in dual connectivity according to embodiments of the present disclosure;
FIG. 3 is a flow chart of a cell group updating method for a terminal in dual connectivity according to embodiments of the present disclosure;
FIG. 4 is a flow chart of a cell group updating method for a terminal in dual connectivity according to embodiments of the present disclosure;
FIG. 5 is a flow chart of a cell group updating method for a terminal in dual connectivity according to embodiments of the present disclosure;
FIG. 6 is a flow chart of a cell group updating method for a terminal in dual connectivity according to embodiments of the present disclosure;
FIG. 7 is a flow chart of a cell group updating method for a terminal in dual connectivity according to embodiments of the present disclosure;
FIG. 8 is a flow chart of a cell group updating method for a terminal in dual connectivity according to embodiments of the present disclosure;
FIG. 9 is a flow chart of a cell group updating method for a terminal in dual connectivity according to embodiments of the present disclosure;
FIG. 10 is a flow chart of a cell group updating method for a terminal in dual connectivity according to embodiments of the present disclosure;
FIG. 11 is a flow chart of a cell group updating method for a terminal in dual connectivity according to embodiments of the present disclosure;
FIG. 12 is a flow chart of a cell group updating method for a terminal in dual connectivity according to embodiments of the present disclosure;
FIG. 13 is a schematic diagram of interaction in a cell group updating method for a terminal in dual connectivity according to embodiments of the present disclosure;
FIG. 13a is a schematic diagram of interaction in a cell group updating method for a terminal in dual connectivity according to embodiments of the present disclosure;
FIG. 14 is a structural diagram of a communication device according to embodiments of the present disclosure;
FIG. 15 is a structural diagram of another communication device according to embodiments of the present disclosure; and
FIG. 16 is a structural diagram of a chip according to embodiments of the present disclosure.

### DETAILED DESCRIPTION

For ease of understanding, terms involved in the present disclosure are first introduced.

### 1. Primary cell (PCell)

There may be multiple cells under an MCG, including a cell used to initiate an initial access. This cell is referred to as a PCell. As the name suggests, the PCell is the most "primary" cell in the MCG.

### 2. Secondary cell (SCell)

A secondary cell in an MCG is known as an SCell. A PCell under the MCG and the SCell under the MCG are aggregated together through carrier aggregation (CA). The MCG includes one or more SCells.

### 3. Primary secondary cell (PSCell)

A primary secondary cell in an SCG is known as a PSCell. The SCG includes one or more SCells.

### 4. Source MN

an MN that currently serves a terminal.

### 5. Source SN

an SN that currently serves a terminal.

### 6. Target MN

an MN that is used to prepare, for a terminal, one or more of a target PCell, a target MCG, a candidate target PCell, or a candidate target MCG. A target MN that prepares a candidate target PCell and/or a candidate target MCG may also be referred to as a candidate target MN.

### 7. Target SN

an SN that is used to prepare, for a terminal, one or more of a target PSCell, a target SCG, a candidate target PSCell, or a candidate target SCG. A target SN that prepares a candidate target PSCell and/or a candidate target SCG may also be referred to as a candidate target SN.

### 8. Target MCG

A target MCG is a target MCG or a candidate target MCG that can provide network services for a terminal after MCG change is initiated, which corresponds to a target MN.

### 9. Target SCG

A target SCG is a target SCG or a candidate target SCG that can provide network services for a terminal after SCG change or addition is initiated, which corresponds to a target SN.

### 10. Mobility process based on conditional triggering

In a 5th generation mobile communication technology (5G) system, a terminal may perform cell mobility based on a "pre-configured condition" of a network device and a "pre-configured cell" corresponding to the condition. When the terminal meets the "pre-configured condition", such as a specific measurement event, the terminal changes a serving cell to the "pre-configured cell". The "mobility process based on conditional triggering" includes: conditional handover (CHO), conditional PSCell addition (CPA), and conditional PSCell change (CPC).

### 11. Process of selective activation of cell group

In a 5G system, a network device may provide a "pre-configured cell group" for a terminal. The network device may subsequently activate or deactivate the "pre-configured cell group" through activation signaling without the need to re-provision the configuration of the group.

In order to better understand a cell group updating method for a terminal in dual connectivity in embodiments of the present disclosure, a communication system to which the embodiments of the present disclosure are applicable is first described hereinafter.

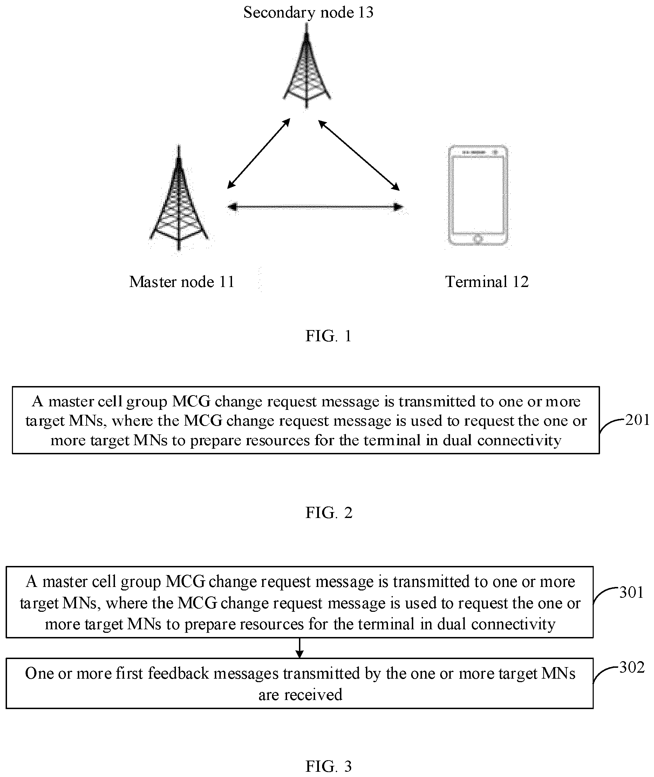

Reference is made to FIG. 1, which is a schematic diagram of an architecture of a communication system according to embodiments of the present disclosure. The communication system may include, but is not limited to, one network device and one terminal. The quantity and form of devices shown in FIG. 1 are only for examples and do not constitute a limitation on the embodiments of the present disclosure. In actual applications, two or more than two network devices, two or more than two auxiliary communication devices, and two or more than two terminals, may be included. In FIG. 1, a case where the communication system includes a master node 11, a terminal 12 and a secondary node 13 is taken as an example.

It should be noted that the technical solutions of the embodiments of the present disclosure can be applied to various communication systems, such as a long term evolution (LTE) system, a 5th generation (5G) mobile communication system, a 5G new radio (NR) system, or other new mobile communication systems in the future.

The master node 11 and the secondary node 13 in the embodiments of the present disclosure are entities on a network side that are used to transmit or receive signals, which may be a master node and a secondary node corresponding to the terminal 12, respectively. For example, each of the master node 11 and the secondary node 13 may be an evolved NodeB (eNB), a transmission reception point (TRP), a next generation NodeB (gNB) in an NR system, a base station in other mobile communication systems in the future, or an access node in a wireless fidelity (WiFi) system, etc. The specific technologies and the specific device form used by the network device are not limited in the embodiments of the present disclosure. The network device according to the embodiments of the present disclosure may include a central unit (CU) and a distributed unit (DU). The CU may also be referred to as a control unit. Protocol layers of the network device, such as a base station, may be separated by using the structure of CU-DU, where functions of some protocol layers are arranged in the CU for centralized control, and functions of some or all of the remaining protocol layers are distributed in the DU, and the CU centrally controls the DU.

The terminal 12 in the embodiments of the present disclosure is an entity on a user side for receiving or transmitting signals, such as a mobile phone. The terminal may also be referred to as a terminal device, a user equipment (UE), a mobile station (MS), a mobile terminal (MT), etc. The terminal may be a car with a communication function, a smart car, a mobile phone, a wearable device, a tablet computer (Pad), a computer with a wireless reception and transmission function, a virtual reality (VR) terminal, an augmented reality (AR) terminal, a wireless terminal in industrial control, a wireless terminal in self-driving (self-driving), a wireless terminal in a remote medical surgery, a wireless terminal in a smart grid, a wireless terminal in transportation safety, a wireless terminal in a smart city, a wireless terminal in a smart home, etc. The specific technologies and the specific device form used by the terminal are not limited in the embodiments of the present disclosure.

It can be understood that the communication system described in the embodiments of the present disclosure is to more clearly illustrate the technical solutions of the embodiments of the present disclosure, and does not constitute a limitation on the technical solutions provided by the embodiments of the present disclosure. A person skilled in the art can know that, with evolution of the system architecture and emergence of new service scenarios, the technical solutions provided by the embodiments of the present disclosure are also applicable to similar technical problems.

In the process of mobility management, signaling only involves change or addition of either an SN or an MN, and simultaneous occurrence of both is not studied. However, change of cell group (CG) in a DC scenario may include a situation of changing an MCG and an SCG simultaneously, or adding an SCG while changing an MCG. In this case, multiple MN and SN nodes are required to perform signaling interactions, to achieve changing an MCG and an SCG simultaneously, or adding an SCG while changing an MCG. In the present disclosure, a reasonable network node negotiation process is introduced, in this way, a terminal supporting DC can change an MCG and an SCG at the same time or add an SCG while changing an MCG, which improves reliability of the mobility process for the terminal.

The MCG may include only a primary cell PCell or include a PCell and a secondary cell SCell; the SCG may include only a primary secondary cell PSCell or include a PSCell and a secondary cell SCell.

It should be noted that in the present disclosure, a cell group updating method for a terminal in dual connectivity according to any embodiment may be performed alone, or in combination with possible implementations in other embodiments, or in combination with any technical solutions in the related technologies.

A cell group updating method and a cell group updating device for a terminal in dual connectivity according to the present disclosure are described in detail hereinafter with reference to the drawings.

In the embodiments of the present disclosure, for ease of description, the terminal according to the embodiments of the present disclosure, unless otherwise specified, refers to a terminal in dual connectivity.

Reference is made to FIG. 2, which is a flow chart of a cell group updating method for a terminal in dual connectivity according to embodiments of the present disclosure, and the method is performed by a source master node MN. As shown in FIG. 2, the method may include, but is not limited to, the following step.

Step 201: a master cell group MCG change request message is transmitted to one or more target MNs, where the MCG change request message is used to request the one or more target MNs to prepare resources for the terminal in dual connectivity.

The MCG change request message may be a handover request message, etc., which is not limited in the present disclosure.

In addition, the MCG change request message may also be used to indicate that the target MN needs to add one or more associated target SNs for a specific terminal in dual connectivity, that is, to configure both MCG and SCG mobility for the specific terminal in dual connectivity.

In the present disclosure, when preparing to configure, for the DC terminal, a cell group updating process such as mobility based on conditional triggering and/or selective activation of cell group, the source MN may transmit the MCG change request message to the one or more target MNs to request the one or more target MNs to prepare resources for the terminal.

Optionally, the source MN may request, through the MCG change request message, the target MN to prepare a target candidate secondary cell group SCG and a target candidate master cell group MCG for the DC terminal, then, the target MN may determine the target candidate MCG and the target candidate SCG based on the MCG change request message, or prepare the target candidate SCG for the DC terminal by interacting with the target SN. In this way, changing an MCG and an SCG simultaneously, or adding an SCG while changing an MCG is achieved, which improves reliability of the mobility process for the terminal.

It should be noted that there may be one target MN or may be more than one target MNs.

In the present disclosure, the source MN may transmit, to the one or more target MNs, the master cell group MCG change request message used to request the one or more target MNs to prepare resources for the terminal in dual connectivity. As a result, through negotiation of network nodes, changing an MCG and an SCG simultaneously, or adding an SCG while changing an MCG is achieved, which improves reliability of the mobility process for the terminal.

Reference is made to FIG. 3, which is a flow chart of a cell group updating method for a terminal in dual connectivity according to embodiments of the present disclosure, and the method is performed by a source master node MN. As shown in FIG. 3, the method may include, but is not limited to, the following steps.

Step 301: a master cell group MCG change request message is transmitted to one or more target MNs, where the MCG change request message is used to request the one or more target MNs to prepare resources for the terminal in dual connectivity.

In the present disclosure, for the specific implementation of step 301, reference may be made to the detailed description of any embodiment of the present disclosure, which is not further provided herein.

Step 302: one or more first feedback messages transmitted by the one or more target MNs are received.

The first feedback message may be used to indicate any of the following: MCG change preparation success, or MCG change preparation failure, and the first feedback message may be any of the following: a handover request acknowledgement message, or a handover request failure message, etc., which are not limited in the present disclosure.

In the present disclosure, after receiving the MCG change request message transmitted by the source MN, the target MN may determine, through access control, whether corresponding resources can be prepared, and transmit a feedback message to the source MN based on a result of the access control. For example, the feedback message is a handover request acknowledgement message, or a handover request failure message.

For example, the target MN determines, through access control, that corresponding resources can be prepared, i.e., resources such as a target candidate MCG can be prepared, then, a handover request acknowledgement message may be fed back to the source MN to indicate MCG change preparation success, that is, MCG change is supported. Or, the target MN determines, through access control, that corresponding resources can not be prepared, then, a handover request failure message may be transmitted to the source MN to indicate MCG change preparation failure, that is, MCG change is not supported. Therefore, the source MN may determine, based on the first feedback information, whether the target MN supports MCG change.

Optionally, the target MN determines, through access control, that corresponding resources can be prepared, i.e., resources such as a target candidate MCG and a target candidate SCG can be prepared; if the target MN determines, through access control, that a target candidate MCG and a target candidate SCG can be prepared, then, a handover request acknowledgement message may be fed back to the source MN; or, if it is determined, through access control, that the target candidate MCG and the target candidate SCG can not be prepared, then, a handover request failure message may be fed back to the source MN.

It should be noted that, since there may be multiple target MNs, the source MN may receive first feedback messages transmitted by multiple target MNs, and determine whether the corresponding target MN supports MCG change based on the first feedback message transmitted by each target MN.

In the present disclosure, the source MN may transmit, to the one or more target MNs, the master cell group MCG change request message used to request the one or more target MNs to prepare resources for the terminal in dual connectivity. After that, the source MN may receive the one or more first feedback messages transmitted by the one or more target MNs. As a result, through negotiation of network nodes, changing an MCG and an SCG simultaneously, or adding an SCG while changing an MCG is achieved, which improves reliability of the mobility process for the terminal.

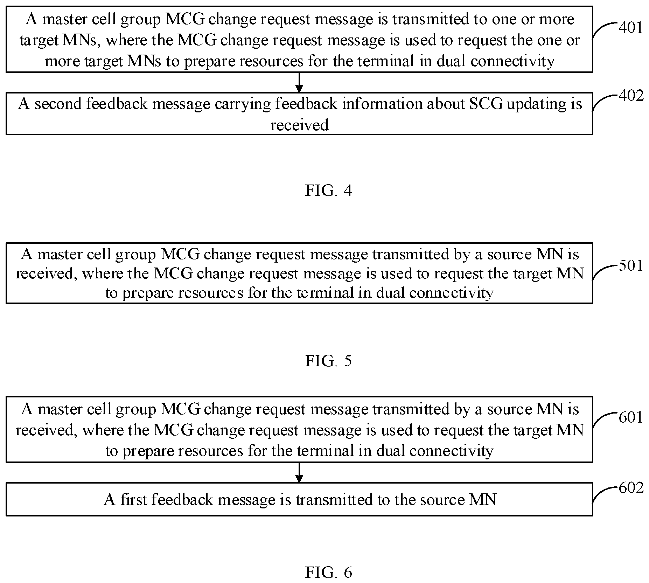

Reference is made to FIG. 4, which is a flow chart of a cell group updating method for a terminal in dual connectivity according to embodiments of the present disclosure, and the method is performed by a source master node MN. As shown in FIG. 4, the method may include, but is not limited to, the following steps.

Step 401: a master cell group MCG change request message is transmitted to one or more target MNs, where the MCG change request message is used to request the one or more target MNs to prepare resources for the terminal in dual connectivity.

In the present disclosure, for the specific implementation of step 401, reference may be made to the detailed description of any embodiment of the present disclosure, which is not further provided herein.

Step 402: a second feedback message carrying feedback information about SCG updating is received.

The SCG updating includes at least one of the following: SCG change, or SCG addition.

In the present disclosure, after receiving the MCG request message transmitted by the source MN, the target MN may transmit a secondary cell group SCG change request message and/or an SCG addition request message to one or more target SNs. Then, the target SN may prepare corresponding resources based on the SCG change request message and/or the SCG addition request message, and transmit to the target MN a feedback message indicating whether SCG change preparation and/or SCG addition preparation are successful. In this way, the target MN can determine whether the target SN supports SCG change and/or SCG addition.

It should be noted that, since there may be multiple target SNs, the target MN may receive feedback messages transmitted by multiple target SNs, each of the feedback messages is used to indicate whether SCG change preparation and/or SCG addition preparation are successful, and the target MN may determine whether the corresponding target SN supports SCG change based on an SCG change feedback message transmitted by each target SN, and determine whether the corresponding target SN supports SCG addition based on an SCG addition feedback message transmitted by each target SN.

In the present disclosure, the second feedback message may be used to indicate at least one of the following: MCG change preparation success, MCG change preparation failure, SCG change and/or addition preparation success, or, SCG change and/or addition preparation failure. The second feedback message may be any of the following: a handover request acknowledgement message, or a handover request failure message, etc., which is not limited in the present disclosure.

In the present disclosure, when the target SN completes preparation of the corresponding resources, it may feed back an SCG modification and/or SN addition request acknowledgement message to the target MN to indicate SCG change and/or SCG addition preparation success. In a case that the target SN can not prepare the corresponding resources, it may transmit an SCG modification and/or SN addition rejection message to the target MN to indicate SCG change and/or SCG addition preparation failure. After that, the target MN may determine the second feedback message based on the MCG change preparation success or failure, or the received SCG change and/or SCG addition acknowledgement message that are transmitted by the target SN, or the SCG change and/or SCG addition rejection message. In this way, the source MN can determine, based on the second feedback information, whether the target MN supports MCG change and/or whether the corresponding target SN supports SCG change and/or SCG addition.

For example, if the SCG change feedback messages and/or the SCG addition feedback messages fed back by the multiple target SNs each indicate that SCG change and/or SCG addition preparation are failed, and the multiple target MNs each determine through access control that MCG change preparation is failed, then the second feedback message may be a handover request failure message to indicate that MCG change preparation is failed, SCG change and/or addition preparation are failed.

Or, if the SCG change feedback messages and/or the SCG addition feedback messages fed back by the multiple target SNs each indicate that SCG change and/or SCG addition preparation are failed, or the multiple target MNs each determine through access control that MCG change preparation is failed, then the second feedback message may be a handover request failure message to indicate that MCG change preparation is failed, or SCG change and/or addition preparation are failed.

Or, if any target MN of the multiple target MNs determines through access control that MCG change preparation is successful, and an SCG change feedback message and/or an SCG addition feedback message fed back by any target SN of the multiple target SNs indicate that SCG change and/or SCG addition preparation are successful, then the second feedback message may be a handover request success message to indicate that MCG change preparation is successful, SCG change and/or addition preparation are successful.

Or, if any target MN of the multiple target MNs determines through access control that MCG change preparation is successful, and an SCG change feedback message and/or an SCG addition feedback message fed back by any target SN of the multiple target SNs indicate that SCG change and/or SCG addition preparation are failed, then the second feedback message may be a handover request success message to indicate that MCG change preparation is successful, SCG change and/or addition preparation are failed.

In the present disclosure, the source MN may transmit, to the one or more target MNs, the master cell group MCG change request message used to request the one or more target MNs to prepare resources for the terminal in dual connectivity. After that, the source MN may receive the second feedback message carrying the feedback information about the SCG updating. As a result, through negotiation of network nodes, changing an MCG and an SCG simultaneously, or adding an SCG while changing an MCG is achieved, which improves reliability of the mobility process for the terminal.

Reference is made to FIG. 5, which is a flow chart of a cell group updating method for a terminal in dual connectivity according to embodiments of the present disclosure, and the method is performed by a target master node MN. As shown in FIG. 5, the method may include, but is not limited to, the following step.

Step 501: a master cell group MCG change request message transmitted by a source MN is received, where the MCG change request message is used to request the target MN to prepare resources for the terminal in dual connectivity.

The MCG change request message may be a handover request message, etc., which is not limited in the present disclosure.

In addition, the MCG change request message may also be used to indicate that the target MN needs to add one or more associated target SNs for a specific terminal in dual connectivity, that is, to configure both MCG and SCG mobility for the specific terminal in dual connectivity.

In the present disclosure, when preparing to configure, for the DC terminal, a cell group updating process such as mobility based on conditional triggering and/or selective activation of cell group, the source MN may transmit the MCG change request message to the one or more target MNs to request the one or more target MNs to prepare resources for the terminal.

Optionally, the source MN may request, through the MCG change request message, the target MN to prepare a target candidate secondary cell group SCG and a target candidate master cell group MCG for the DC terminal, then, the target MN may determine the target candidate MCG and the target candidate SCG based on the MCG change request message, or prepare the target candidate SCG for the DC terminal by interacting with the target SN. In this way, changing an MCG and an SCG simultaneously, or adding an SCG while changing an MCG is achieved, which improves reliability of the mobility process for the terminal.

It should be noted that there may be one target MN or may be more than one target MNs.

In the present disclosure, the target MN may receive the master cell group MCG change request message transmitted by the source MN, where the master cell group MCG change request message is used to request the target MN to prepare resources for the terminal in dual connectivity. As a result, through negotiation of network nodes, changing an MCG and an SCG simultaneously, or adding an SCG while changing an MCG is achieved, which improves reliability of the mobility process for the terminal.

Reference is made to FIG. 6, which is a flow chart of a cell group updating method for a terminal in dual connectivity according to embodiments of the present disclosure, and the method is performed by a target master node MN. As shown in FIG. 6, the method may include, but is not limited to, the following steps.

Step 601: a master cell group MCG change request message transmitted by a source MN is received, where the MCG change request message is used to request the target MN to prepare resources for the terminal in dual connectivity.

In the present disclosure, for the specific implementation of step 601, reference may be made to the detailed description of any embodiment of the present disclosure, which is not further provided herein.

Step 602: a first feedback message is transmitted to the source MN.

The first feedback message may be used to indicate any of the following: MCG change preparation success, or MCG change preparation failure, and the first feedback message may be any of the following: a handover request acknowledgement message, or a handover request failure message, etc., which are not limited in the present disclosure.

In the present disclosure, after receiving the MCG change request message transmitted by the source MN, the target MN may determine, through access control, whether corresponding resources can be prepared, and transmit a feedback message to the source MN based on a result of the access control. For example, the feedback message is a handover request acknowledgement message, or a handover request failure message.

For example, the target MN determines, through access control, that corresponding resources can be prepared, i.e., resources such as a target candidate MCG can be prepared, then, a handover request acknowledgement message may be fed back to the source MN to indicate MCG change preparation success, that is, MCG change is supported. Or, the target MN determines, through access control, that corresponding resources can not be prepared, then, a handover request failure message may be transmitted to the source MN to indicate MCG change preparation failure, that is, MCG change is not supported. Therefore, the source MN may determine, based on the first feedback information, whether the target MN supports MCG change.

Optionally, the target MN determines, through access control, that corresponding resources can be prepared, i.e., resources such as a target candidate MCG and a target candidate SCG can be prepared; if the target MN determines, through access control, that a target candidate MCG and a target candidate SCG can be prepared, then, a handover request acknowledgement message may be fed back to the source MN; or, if it is determined, through access control, that the target candidate MCG and the target candidate SCG can not be prepared, then, a handover request failure message may be fed back to the source MN.

It should be noted that, since there may be multiple target MNs, the source MN may receive first feedback messages transmitted by multiple target MNs, and determine whether the corresponding target MN supports MCG change based on the first feedback message transmitted by each target MN.

In the present disclosure, the target MN may receive the master cell group MCG change request message transmitted by the source MN, which is used to request the target MN to prepare resources for the terminal in dual connectivity, and then may transmit the first feedback message to the source MN. As a result, through negotiation of network nodes, changing an MCG and an SCG simultaneously, or adding an SCG while changing an MCG is achieved, which improves reliability of the mobility process for the terminal.

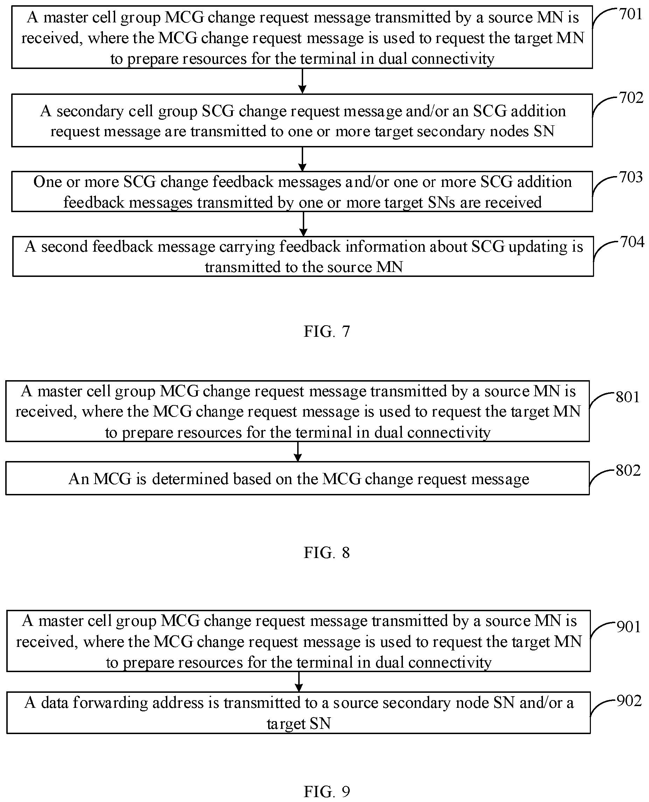

Reference is made to FIG. 7, which is a flow chart of a cell group updating method for a terminal in dual connectivity according to embodiments of the present disclosure, and the method is performed by a target master node MN. As shown in FIG. 7, the method may include, but is not limited to, the following steps.

Step 701: a master cell group MCG change request message transmitted by a source MN is received, where the MCG change request message is used to request the target MN to prepare resources for the terminal in dual connectivity.

In the present disclosure, for the specific implementation of step 701, reference may be made to the detailed description of any embodiment of the present disclosure, which is not further provided herein.

Step 702: a secondary cell group SCG change request message and/or an SCG addition request message are transmitted to one or more target secondary nodes SN.

The SCG change request may be any of the following: a secondary node SN addition request message, an SN modification request message, etc., and the SCG addition request may be any of the following: an SN addition request message, etc., which are not limited in the present disclosure.

In the present disclosure, after receiving the MCG request message transmitted by the source MN, the target MN may transmit the secondary cell group SCG change request message and/or the SCG addition request message to the one or more target SNs. After that, the target SCG may prepare corresponding resources based on the SCG change request message and/or the SCG addition request message.

It should be noted that there may be one target SN or may be more than one target SNs. In addition, the multiple target SNs corresponding to the multiple target MNs may be the same, or may be different, or may be partially the same.

Optionally, the target MN may also initiate an SCG updating process to prepare a target candidate SCG for the DC terminal. As a result, changing an MCG and an SCG simultaneously, or adding an SCG while changing an MCG is achieved, which improves reliability of the mobility process for the terminal.

Step 703: SCG change feedback messages and/or SCG addition feedback messages transmitted by one or more target SNs are received.

The SCG change feedback message may include any of the following: an SN addition request acknowledgement message, an SN modification request acknowledgement message, an SN addition request rejection message, or an SN modification request rejection message, etc., and the SCG addition feedback message may include any of the following: an SN addition request acknowledgement message, or an SN addition request rejection message, etc., which are not limited in the present disclosure.

In the present disclosure, when the target SN completes preparation of the corresponding resources, it may feed back an SCG modification and/or SN addition request acknowledgement message to the target MN to indicate SCG change and/or SCG addition preparation success. In a case that the target SN can not prepare the corresponding resources, it may transmit an SCG modification and/or SN addition rejection message to the target MN to indicate SCG change and/or SCG addition preparation failure. In this way, the target MN can determine whether the target SN supports SCG change and/or SCG addition.

It should be noted that, since there may be multiple target SNs, the target MN may receive feedback messages transmitted by multiple target SNs, each of the feedback messages is used to indicate whether SCG change preparation and/or SCG addition preparation are successful, and the target MN may determine whether the corresponding target SN supports SCG change based on an SCG change feedback message transmitted by each target SN, and determine whether the corresponding target SN supports SCG addition based on an SCG addition feedback message transmitted by each target SN.

Step 704: a second feedback message carrying feedback information about SCG updating is transmitted to the source MN.

The second feedback message may be used to indicate at least one of the following: MCG change preparation success, MCG change preparation failure, SCG change and/or addition preparation success, or, SCG change and/or addition preparation failure. The second feedback message may be any one of the following: a handover request acknowledgement message, or a handover request failure message, etc., which is not limited in the present disclosure.

In the present disclosure, the target MN may determine the second feedback message based on the MCG change preparation success or failure, or the received SCG change and/or SCG addition acknowledgement message that are transmitted by the target SN, or the SCG change and/or SCG addition rejection message. In this way, the source MN can determine, based on the second feedback information, whether the target MN supports MCG change and/or whether the corresponding target SN supports SCG change and/or SCG addition.

For example, if the SCG change feedback messages and/or the SCG addition feedback messages fed back by the multiple target SNs each indicate that SCG change and/or SCG addition preparation are failed, and the multiple target MNs each determine through access control that MCG change preparation is failed, then the second feedback message may be a handover request failure message to indicate that MCG change preparation is failed, SCG change and/or addition preparation are failed.

Or, if the SCG change feedback messages and/or the SCG addition feedback messages fed back by the multiple target SNs each indicate that SCG change and/or SCG addition preparation are failed, or the multiple target MNs each determine through access control that MCG change preparation is failed, then the second feedback message may be a handover request failure message to indicate that MCG change preparation is failed, or SCG change and/or addition preparation are failed.

Or, if any target MN of the multiple target MNs determines through access control that MCG change preparation is successful, and an SCG change feedback message and/or an SCG addition feedback message fed back by any target SN of the multiple target SNs indicate that SCG change and/or SCG addition preparation are successful, then the second feedback message may be a handover request success message to indicate that MCG change preparation is successful, and SCG change and/or addition preparation are successful.

Or, if any target MN of the multiple target MNs determines through access control that MCG change preparation is successful, and an SCG change feedback message and/or an SCG addition feedback message fed back by any target SN of the multiple target SNs indicate that SCG change and/or SCG addition preparation are failed, then the second feedback message may be a handover request success message to indicate that MCG change preparation is successful, SCG change and/or addition preparation are failed.

In the present disclosure, after receiving the master cell group MCG change request message transmitted by the source MN, which is used to request the target MN to prepare resources for the terminal in dual connectivity, the target MN may transmit the secondary cell group SCG change request message and/or the SCG addition request message to the one or more target SNs, and receive the one or more SCG change feedback messages and/or the one or more SCG addition feedback messages transmitted by the one or more target SNs. Then the target MN may transmit the second feedback message carrying the feedback information about the SCG updating to the source MN. Therefore, through the negotiation among the source MN, the target MN and the target SN, changing an MCG and an SCG simultaneously, or adding an SCG while changing an MCG is achieved, which improves reliability of the mobility process for the terminal.

Reference is made to FIG. 8, which is a flow chart of a cell group updating method for a terminal in dual connectivity according to embodiments of the present disclosure, and the method is performed by a target master node MN. As shown in FIG8, the method may include, but is not limited to, the following steps.

Step 801: a master cell group MCG change request message transmitted by a source MN is received, where the MCG change request message is used to request the target MN to prepare resources for the terminal in dual connectivity.

In the present disclosure, for the specific implementation of step 801, reference may be made to the detailed description of any embodiment of the present disclosure, which is not further provided herein.

Step 802, an MCG is determined based on the MCG change request message.

In the present disclosure, the source MN may indicate an access cell via the MCG handover request message, and the target MN may determine a target candidate MCG and/or a target candidate SCG based on the access cell indicated in the MCG change request message.

Optionally, after receiving the MCG change request message from the source MN, the target MN may determine the target candidate MCG and the target candidate SCG through comprehensive judgment using an implementation algorithm of the target MN, based on requirement information (such as a cell channel quality, a requested service type, a data rate, and a current load of the target cell) of the target candidate SCG and the target candidate MCG in the request message. As a result, changing an MCG and an SCG simultaneously, or adding an SCG while changing an MCG is achieved.

In the present disclosure, after receiving the master cell group MCG change request message transmitted by the source MN, which is used to request the target MN to prepare resources for the terminal in dual connectivity, the target MN may determine the MCG according to the MCG change request message, and prepare the target candidate SCG for the terminal by interacting with the target SN. As a result, changing an MCG and an SCG simultaneously, or adding an SCG while changing an MCG is achieved, which improves reliability of the mobility process for the terminal.

Reference is made to FIG. 9, which is a flow chart of a cell group updating method for a terminal in dual connectivity according to embodiments of the present disclosure, and the method is performed by a target master node MN. As shown in FIG. 9, the method may include, but is not limited to, the following steps.

Step 901: a master cell group MCG change request message transmitted by a source MN is received, where the MCG change request message is used to request the target MN to prepare resources for the terminal in dual connectivity.

In the present disclosure, for the specific implementation of step 901, reference may be made to the detailed description of any embodiment of the present disclosure, which is not further provided herein.

Step 902: a data forwarding address is transmitted to a source secondary node SN and/or a target SN.

In the present disclosure, after the target MN determines that SCG change or addition can be performed, the terminal may access the target SN. In this case, the target MN may transmit the data forwarding address to the source SN. As a result, the source SN can forward information, such as user data, from the source MN to the node corresponding to the data forwarding address based on the data forwarding address.

Or, in a case that the target MN determines to perform SCG change or addition, the target MN may transmit the data forwarding address to the target SN for data forwarding.

In the present disclosure, after receiving the master cell group MCG change request message transmitted by the source MN, which is used to request the target MN to prepare resources for the terminal in dual connectivity, the target MN may transmit the data forwarding address to the source SN and/or the target SN. As a result, through negotiation of network nodes, changing an MCG and an SCG simultaneously, or adding an SCG while changing an MCG is achieved, which improves reliability of the mobility process for the terminal.

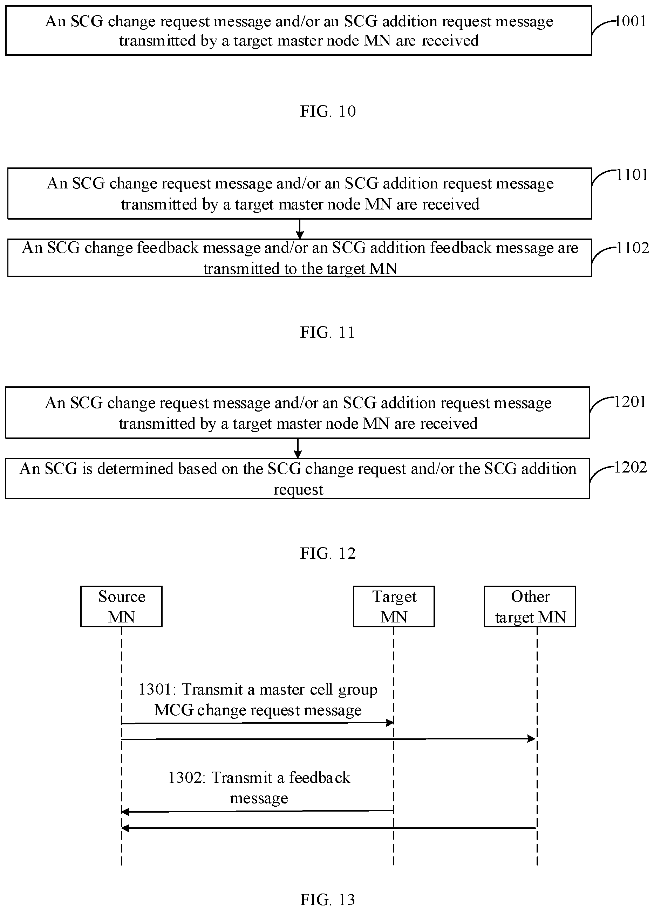

Reference is made to FIG. 10, which is a flow chart of a cell group updating method for a terminal in dual connectivity according to embodiments of the present disclosure, and the method is performed by a target secondary node SN. As shown in FIG. 10, the method may include, but is not limited to, the following step.

Step 1001: an SCG change request message and/or an SCG addition request message transmitted by a target master node MN are received.

The SCG change request may be any of the following: a secondary node SN addition request message, or an SN modification request message, etc., and the SCG addition request may be any of the following: an SN addition request message, etc., which are not limited in the present disclosure.

In the present disclosure, after receiving the MCG request message transmitted by the source MN, the target MN may transmit a secondary cell group SCG change request message and/or an SCG addition request message to one or more target SNs. Then, the target SN may prepare corresponding resources based on the SCG change request message and/or the SCG addition request message, and transmit to the target MN a feedback message indicating whether SCG change preparation and/or SCG addition preparation are successful. In this way, the target MN can determine whether the target SN supports SCG change and/or SCG addition.

It should be noted that there may be one target SN or may be more than one target SNs. In addition, the multiple target SNs corresponding to the multiple target MNs may be the same, or may be different, or may be partially the same.

In the present disclosure, the target SN may receive the SCG change request message and/or the SCG addition request message transmitted by the target MN, and then determine the SCG based on the SCG change request message and/or the SCG addition request message. As a result, changing an MCG and an SCG simultaneously, or adding an SCG while changing an MCG is achieved, which improves reliability of the mobility process for the terminal.

Reference is made to FIG. 11, which is a flow chart of a cell group updating method for a terminal in dual connectivity according to embodiments of the present disclosure, and the method is performed by a target secondary node SN. As shown in FIG. 11, the method may include, but is not limited to, the following steps.

Step 1101: an SCG change request message and/or an SCG addition request message transmitted by a target master node MN are received.

In the present disclosure, for the specific implementation of step 1101, reference may be made to the detailed description of any embodiment of the present disclosure, which is not further provided herein.

Step 1102: an SCG change feedback message and/or an SCG addition feedback message are transmitted to the target MN.

The SCG change feedback message may include any of the following: an SN addition request acknowledgement message, an SN modification request acknowledgement message, an SN addition request rejection message, or an SN modification request rejection message, etc., and the SCG addition feedback message may include any of the following: an SN addition request acknowledgement message, or an SN addition request rejection message, etc., which are not limited in the present disclosure.

In the present disclosure, after receiving the SCG change request message and/or SCG addition request message transmitted by the target MN, the target SN may determine, through access control, whether corresponding resources can be prepared, and transmit the feedback message to the target MN based on a result of the access control. For example, the feedback message may be an SN addition request acknowledgement message, an SN modification request acknowledgement message, an SN addition request rejection message, or an SN modification request rejection message, etc.

For example, the target SN determines, through access control, that corresponding resources can be prepared, for example, a target candidate SCG can be prepared, then, the SCG modification and/or SN addition request acknowledgement message may be fed back to the target MN to indicate that the SCG change and/or SCG addition preparation are successful, that is, SCG change and/or addition are supported. Or, the target SN determines, through access control, that the corresponding resources can not be prepared, then, the SCG change and/or SCG addition preparation failure are transmitted to the target MN to indicate that the SCG change and/or SCG addition preparation are failed, i.e., SCG change and/or addition are not supported. In this way, the target MN can determine whether the target SN supports SCG change and/or SCG addition.

It should be noted that, since there may be multiple target SNs, the target MN may receive feedback messages transmitted by multiple target SNs, each of the feedback messages is used to indicate whether SCG change preparation and/or SCG addition preparation are successful, and the target MN may determine whether the corresponding target SN supports SCG change based on the SCG change feedback message transmitted by each target SN, and determine whether the corresponding target SN supports SCG addition based on the SCG addition feedback message transmitted by each target SN.

In the present disclosure, after receiving the SCG change request message and/or the SCG addition request message transmitted by the target MN, the target SN transmits the SCG change feedback message and/or the SCG addition feedback message to the target MN, and the target SN may determine the SCG based on the SCG change request message and/or the SCG addition request message. As a result, changing an MCG and an SCG simultaneously, or adding an SCG while changing an MCG is achieved, which improves reliability of the mobility process for the terminal.

Reference is made to FIG. 12, which is a flow chart of a cell group updating method for a terminal in dual connectivity according to embodiments of the present disclosure, and the method is performed by a target secondary node SN. As shown in FIG. 12, the method may include, but is not limited to, the following steps.

Step 1201: an SCG change request message and/or an SCG addition request message transmitted by a target master node MN are received.

In the present disclosure, for the specific implementation of step 1201, reference may be made to the detailed description of any embodiment of the present disclosure, which is not further provided herein.

Step 1202, an SCG is determined based on the SCG change request and/or the SCG addition request.

In the present disclosure, the target MN may indicate an access cell through the SCG change request and/or the SCG addition request, and the target SN may determine the target candidate SCG based on the access cell indicated in the SCG change request and/or the SCG addition request.

Optionally, after receiving the SCG change request and/or SCG addition request from the target MN, the target SN may determine the target candidate SCG through comprehensive judgment using an implementation algorithm of the target SN, based on requirement information (such as a cell channel quality, a requested service type, a data rate, and a current load of the target cell) of the target candidate SCG in the request message.

In the present disclosure, after receiving the SCG change request message and/or SCG addition request message transmitted by the target MN, the target SN may determine the SCG based on the SCG change request and/or the SCG addition request. Therefore, through the negotiation among the source MN, the target MN and the target SN, changing an MCG and an SCG simultaneously, or adding an SCG while changing an MCG is achieved, which improves reliability of the mobility process for the terminal.

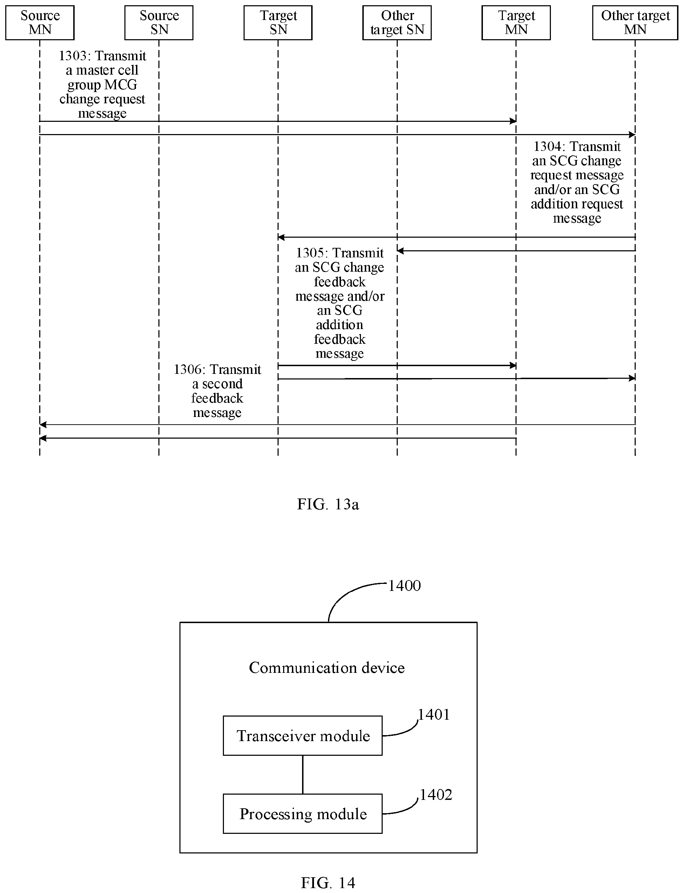

Reference is made to FIG. 13, which is a flow chart of a cell group updating method for a terminal in dual connectivity according to embodiments of the present disclosure. As shown in FIG. 13, the method may be applicable to a scenario of selectively activating MN and SN, that is, a scenario of simultaneously changing MN and SN, applicable to a scenario of simultaneously configuring CHO and CPC, applicable to a scenario of selectively activating MN and adding SN, applicable to a scenario of simultaneously configuring CHO and CPA, and also applicable to other scenarios where MCG and SCG need to be updated. The method may include, but is not limited to, the following steps.

Step 1301: a source master node MN transmits a master cell group MCG change request message to one or more target MNs, where the MCG change request message is used to request the one or more target MNs to prepare resources for a terminal in dual connectivity.

Step 1302: one or more target MNs transmit feedback messages to the source MN.

In the present disclosure, for the specific implementation of step 1301 to step 1302, reference may be made to the detailed description of any embodiment of the present disclosure, which is not further provided herein.

Optionally, after the source master node MN transmits the master cell group MCG change request message to the one or more target MNs, the target MN may transmit an SCG change request message and/or an SCG addition request message to one or more target SNs, then, the one or more target SNs transmit SCG change feedback messages and/or SCG addition feedback messages to the target MN.

In the present disclosure, through negotiation among the various nodes, changing an MCG and an SCG simultaneously, or adding an SCG while changing an MCG is achieved, which improves reliability of the mobility process for the terminal.

Reference is made to FIG. 13a, which is a flow chart of a cell group updating method for a terminal in dual connectivity according to embodiments of the present disclosure. As shown in FIG. 13a, the method may be applicable to a scenario of selectively activating MN and SN, that is, a scenario of simultaneously changing MN and SN, applicable to a scenario of simultaneously configuring CHO and CPC, applicable to a scenario of selectively activating MN and adding SN, applicable to a scenario of simultaneously configuring CHO and CPA, and also applicable to other scenarios where MCG and SCG need to be updated. The method may include, but is not limited to, the following steps.

Step 1303: a source MN transmits an MCG change request message to one or more target MNs, where the MCG change request message is used to request the one or more target MNs to prepare resources for a terminal in dual connectivity. For example, the target MN that receives the MCG request message is requested to prepare resources for the terminal in dual connectivity.

Step 1304: the target MN transmits an SCG change request message and/or an SCG addition request message to one or more target SNs.

Step 1305: the target SN transmits an SCG change feedback message and/or an SCG addition feedback message to the target MN.

Optionally, in a scenario of selectively activating MN and SN, or in a scenario of simultaneously configuring CHO and CPC/CPA, the target MN may transmit a data forwarding address to the source SN, so that the source SN transmits data based on the data forwarding address. In a scenario of selectively activating MN and adding SN, or in a scenario of simultaneously configuring CHO and CPC/CPA, the target MN may transmit a data forwarding address to the target SN, so that the target SN transmits data based on the data forwarding address.

Step 1306: the target MN transmits a second feedback message to the source MN, where the second feedback message may carry feedback information about SCG updating.

In the present disclosure, for the specific implementation of step 1303 to step 1306, reference may be made to the detailed description of any embodiment of the present disclosure, which is not further provided herein.

In an implementation of the present disclosure, after the target MN transmits the second feedback message carrying the feedback information about the SCG updating to the source MN, the source MN transmits to the terminal a radio resource control (RRC) reconfiguration message used to indicate configuration for the terminal to perform MN and SN change, and the terminal may feedback an RRC reconfiguration completion message to the source MN. Then, the terminal may determine, based on configuration of the source MN, the target SN and MN to be connected, initiate random access to the target MN to be connected, and transmit an RRC reconfiguration completion message to the target MN. Then, the terminal may transmit to the source MN a handover success message indicating the target MN that is successfully connected, and the target MN may also transmit an SN reconfiguration completion message to the target SN. For CHO or CPC configuration on the connected node, CHO or CPC configuration on the unconnected node may be indicated to be cancelled. In addition, the target MN may also trigger a protocol data unit (PDU) session path conversion process to transmit a terminal context release message to the source MN. Then, the source MN may transmit the terminal context release message to the source SN to trigger the source node to release the terminal context.

In the present disclosure, through negotiation among the various nodes, changing an MCG and an SCG simultaneously, or adding an SCG while changing an MCG is achieved, which improves reliability of the mobility process for the terminal.

Reference is made to FIG. 14, which is a structural diagram of a communication device 1400 according to the embodiments of the present disclosure. The communication device 1400 shown in FIG. 14 may include a processing module 1401 and a transceiver module 1402. The transceiver module 1402 may include a transmitting module and/or a receiving module. The transmitting module is configured to implement a transmitting function, and the receiving module is configured to implement a receiving function. The transceiver module 1402 may implement the transmitting function and/or the receiving function.

It can be understood that the communication device 1400 may be a source master node, or a device in a source master node device, or a device that can be used in conjunction with a source master node.

The communication device 1400 is on a source master node side:
the transceiver module 1402 is configured to transmit a master cell group (MCG) change request message to one or more target MNs, where the MCG change request message is used to request the one or more target MNs to prepare resources for the terminal in dual connectivity.

Optionally, the MCG change request message is a handover request message.

Optionally, the transceiver module 1402 is further configured to:
receive one or more first feedback messages transmitted by the one or more target MNs.

Optionally, the first feedback message is used to indicate any one of the following: MCG change preparation success, or MCG change preparation failure.

Optionally, the transceiver module 1402 is further configured to:
receive a second feedback message carrying feedback information about secondary cell group (SCG) updating.

Optionally, the SCG updating includes at least one of the following:
SCG change, or SCG addition.

Optionally, the second feedback message is used to indicate at least one of the following:
MCG change preparation success, MCG change preparation failure, SCG change and/or addition preparation success, or, SCG change and/or addition preparation failure.

Optionally, each of the first feedback message and the second feedback message is any one of the following: a handover request acknowledgement message, or a handover request failure message.

In the present disclosure, the source MN may transmit, to the one or more target MNs, the master cell group MCG change request message used to request the one or more target MNs to prepare resources for the terminal in dual connectivity. As a result, through negotiation of network nodes, changing an MCG and an SCG simultaneously, or adding an SCG while changing an MCG is achieved, which improves reliability of the mobility process for the terminal.

It can be understood that the communication device 1400 may be a target master node, or a device in a target master node, or a device that can be used in conjunction with a target master node.

The communication device 1400 is on a target master node side:
the transceiver module 1402 is configured to receive a master cell group (MCG) change request message transmitted by a source MN, where the MCG change request message is used to request the target master node to prepare resources for the terminal in dual connectivity.

Optionally, the MCG change request message is a handover request message.

Optionally, the transceiver module 1402 is further configured to:
transmit a first feedback message to the source MN.

Optionally, the first feedback message is used to indicate any one of the following: MCG change preparation success, or MCG change preparation failure.

Optionally, the device further includes a processing module 1401 configured to:
initiate a secondary cell group (SCG) updating process; and/or,
transmit a secondary cell group (SCG) change request message and/or an SCG addition request message to one or more target secondary nodes (SN).

Optionally, the SCG change request is any one of the following: a secondary node (SN) addition request message, or an SN modification request message; and
the SCG addition request is any one of the following: an SN addition request message.

Optionally, the transceiver module 1402 is further configured to:
receive one or more SCG change feedback messages and/or one or more SCG addition feedback messages transmitted by the one or more target SNs.

Optionally, the SCG change feedback message includes any one of the following: an SN addition request acknowledgement message, an SN modification request acknowledgement message, an SN addition request rejection message, or an SN modification request rejection message; and
the SCG addition feedback message includes any of the following: an SN addition request acknowledgement message, or an SN addition request rejection message.

Optionally, the transceiver module 1402 is further configured to:
transmit a second feedback message carrying feedback information about SCG updating to the source MN.

Optionally, the second feedback message is used to indicate at least one of the following: MCG change preparation success, MCG change preparation failure, SCG change and/or addition preparation success, or, SCG change and/or addition preparation failure.

Optionally, the processing module 1401 is further configured to:
determine an MCG based on the MCG change request message; or,
determine an MCG based on an implementation algorithm of the target MN.

Optionally, the transceiver module 1402 is further configured to:
transmit a data forwarding address to a source secondary node (SN) and/or the target SN.

In the present disclosure, the target MN may receive the master cell group MCG change request message transmitted by the source MN, where the master cell group MCG change request message is used to request the target MN to prepare resources for the terminal in dual connectivity. As a result, through negotiation of network nodes, changing an MCG and an SCG simultaneously, or adding an SCG while changing an MCG is achieved, which improves reliability of the mobility process for the terminal.

It can be understood that the communication device 1400 may be a target secondary node, or a device in a target secondary node, or a device that can be used in conjunction with a target secondary node.

The communication device 1400 is on a target secondary node side:
the transceiver module 1402 is configured to receive a secondary cell group (SCG) change request message and/or an SCG addition request message transmitted by a target master node (MN).

Optionally, the SCG change request is any one of the following: a secondary node (SN) addition request message, or an SN modification request message; and
the SCG addition request is any one of the following: an SN addition request message.

Optionally, the transceiver module 1402 is further configured to:
transmit an SCG change feedback message and/or an SCG addition feedback message to the target MN.

Optionally, the SCG change feedback message includes any one of the following: an SN addition request acknowledgement message, an SN modification request acknowledgement message, an SN addition request rejection message, or an SN modification request rejection message; and
the SCG addition feedback message includes any of the following: an SN addition request acknowledgement message, or an SN addition request rejection message.

Optionally, the device further includes a processing module 1401 configured to:
determine an SCG based on the SCG change request and/or the SCG addition request; or,
determine an SCG based on an implementation algorithm of the target SN.

In the present disclosure, the target SN may receive the SCG change request message and/or the SCG addition request message transmitted by the target MN, and then determine the SCG based on the SCG change request message and/or the SCG addition request message. As a result, changing an MCG and an SCG simultaneously, or adding an SCG while changing an MCG is achieved, which improves reliability of the mobility process for the terminal.

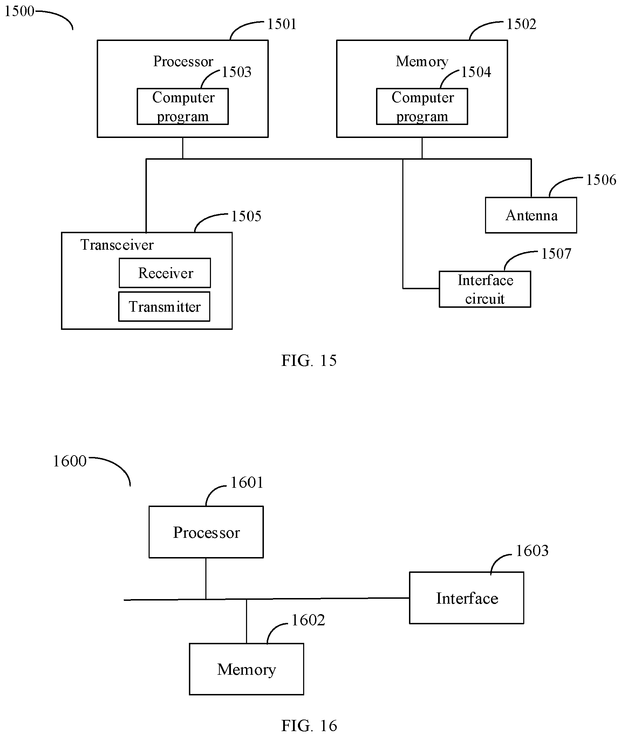

Reference is made to FIG. 15, which is a structural diagram of another communication device 1500 according to the embodiments of the present disclosure. The communication device 1500 may be a source master node device, a target master node device, or a target secondary node device, or may be a chip, a chip system, or a processor that supports the source master node device to implement the above method, or may be a chip, a chip system, or a processor that supports the target master node to implement the above method, or may be a chip, a chip system, or a processor that supports the target secondary node to implement the above method. The device may be configured to implement the method described in the above method embodiments. For details, reference may made to the description in the above method embodiments.

The communication device 1500 may include one or more processors 1501. The processor 1501 may be a general-purpose processor or a special-purpose processor, or the like. For example, the processor may be a baseband processor or a central processing unit. The baseband processor may be configured to process communication protocols and communication data. The central processor may be configured to control communication devices (such as base station, baseband chip, terminal, terminal chip, DU or CU, etc.), execute computer programs, and process data for the computer programs.

Optionally, the communication device 1500 may also include one or more memories 1502, on which a computer program 1504 may be stored. The processor 1501 executes the computer program 1504, to cause the communication device 1500 to perform steps described in the above method embodiments. Optionally, the memory 1502 may also store data. The communication device 1500 and the memory 1502 may be arranged separately or integrated together.

Optionally, the communication device 1500 may also include a transceiver 1505 and an antenna 1506. The transceiver 1505 may be referred to as a transceiver unit, a transceiver, a transceiver circuit, etc., and is configured to implement receiving and transmitting functions. The transceiver 1505 may include a receiver and a transmitter. The receiver may be called a receiver unit or a receiving circuit, etc., configured to implement the receiving function; the transmitter may be referred to as a transmitter unit, a transmitting circuit, etc., configured to implement the transmitting function.

Optionally, the communication device 1500 may also include one or more interface circuits 1507. The interface circuit 1507 is configured to receive code instructions and transmit them to the processor 1501. The processor 1501 executes the code instructions to cause the communication device 1500 to perform the method described in the above method embodiment.

The communication device 1500 is a source master node: the transceiver 1505 is configured to execute step 201 in FIG. 2; step 301 and step 302 in FIG. 3; step 401 and step 402 in FIG. 4, etc.

The communication device 1500 is a target master node: the processor 1501 is configured to execute step 701 in FIG. 7; step 802 in FIG. 8, etc.

The communication device 1500 is a target secondary node: the transceiver 1505 is configured to execute step 1001 in FIG. 10; step 1101 and step 1102 in FIG. 11; step 1201 in FIG. 12, etc.

In an implementation, the processor 1501 may include a transceiver for implementing receiving and transmitting functions. For example, the transceiver may be a transceiver circuit, an interface, or an interface circuit. The transceiver circuit, the interface or the interface circuit configured to implement the receiving and transmitting functions may be separated or integrated together. The above transceiver circuit, interface or interface circuit may be configured for reading and writing codes/data, or the above transceiver circuit, interface or interface circuit may be configured for signal transmission or transfer.

In an implementation, the processor 1501 may store a computer program 1503, and the computer program 1503 is executed on the processor 1501, to cause the communication device 1500 to perform the method described in the above method embodiments. The computer program 1503 may be embedded in the processor 1501, and in this case, the processor 1501 may be implemented by hardware.

In an implementation, the communication device 1500 may include a circuit, which may implement receiving or transmitting functions or communication in the above method embodiments. The processor and the transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver may be manufactured using various IC process technologies, such as complementary metal oxide semiconductor (CMOS), N-type Metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a network device or a terminal, but the scope of the communication device described in the present disclosure is not limited thereto, and the structure of the communication device may not be limited by FIG. 15. The communication device may be a stand-alone device or may be a part of a larger device. For example, the communication device may be:
(1) an independent integrated circuit (IC), or chip, or chip system or subsystem;
(2) a collection of one or more ICs, where, optionally, the IC collection may also include a storage component for storing data and computer programs;
(3) ASIC, such as modem;
(4) a module that can be embedded into other devices;
(5) a receiver, a terminal, an intelligent terminal, a cellular phone, a wireless equipment, a handheld device, a mobile unit, a vehicle-mounted device, a network device, a cloud device, an artificial intelligence device, etc.;
(6) others, etc.

For the case where the communication device may be a chip or a chip system, reference may be made to the structural diagram of the chip shown in FIG. 16. The chip shown in FIG. 16 includes a processor 1601 and an interface 1603. The quantity of processor 1601 may be one or more, and the quantity of interface 1603 may be multiple.

For the case where the chip is configured to implement the functions of the source master node in the embodiments of the present disclosure: the interface 1603 is configured to execute step 201 in FIG. 2; step 301 and step 302 in FIG. 3; step 401 and step 402 in FIG. 4, etc.

For the case where the chip is configured to implement the functions of the target master node in the embodiments of the present disclosure: the interface 1603 is configured to execute step 501 in FIG. 5; step 601 and step 602 in FIG. 6; step 703 and step 704 in FIG. 7 and step 704 in FIG. 7; step 801 in FIG. 8; step 901 and step 902 in FIG. 9, etc.

For the case where the chip is configured to implement the functions of the target secondary node in the embodiments of the present disclosure: the interface 1603 is configured to execute step 1001 in FIG. 10; step 1101 and step 1102 in FIG. 11; step 1201 in FIG. 12, etc.

Optionally, the chip further includes a memory 1603, and the memory 1603 is configured to store necessary computer programs and data.

Those skilled in the art can also understand that various illustrative logical blocks and steps listed in the embodiments of the present disclosure can be implemented by electronic hardware, computer software, or a combination of both. Whether such functions are implemented in hardware or software depends on the specific application and the overall system design requirement. Those skilled in the art can use various methods to implement the described functions for each specific application, but such implementation should not be understood as exceeding the protection scope of the embodiments of the present disclosure.

The present disclosure further provides a readable storage medium, on which instructions are stored. When the instructions are executed by a computer, functions of any of the above method embodiments are implemented.

The present disclosure further provides a computer program product. The computer program product is executed by a computer to implement functions of any of the above method embodiments.

The above embodiments may be implemented in whole or in part by software, hardware, firmware, or any combination thereof. When implemented using software, it may be implemented in whole or in part in the form of a computer program product. The computer program product includes one or more computer programs. When the computer program is loaded and executed on a computer, the processes or functions described in the embodiments of the present disclosure are generated in whole or in part. The computer may be a general-purpose computer, a special-purpose computer, a computer network, or other programmable device. The computer program may be stored in a computer readable storage medium or transferred from a computer readable storage medium to another computer readable storage medium. For example, the computer program may be transferred from a website, a computer, a server, or a data center to another website, computer, server or data center to another website, a computer, a server, or a data center to another website, computer, server or data center through wired means (such as coaxial cable, optical fiber, digital subscriber line (DSL)) or wireless means (such as infrared, wireless, microwave, etc.). The computer readable storage medium may be any available medium that can be accessed by a computer or a data storage device integrated by one or more available media, which includes a server, a data center, and so on. The available media may be magnetic media (e.g., floppy disk, hard disk, magnetic tape), optical media (e.g., high-density digital video discs (DVD)), or semiconductor media (e.g., solid state disk (SSD)) etc.

Those of ordinary skill in the art may appreciate that the first, second, and other numerical numbers involved in the present disclosure are only for convenience of description and are not used to limit the scope of the embodiments of the present disclosure, or to indicate the order.

At least one in the present disclosure may also be described as one or more, and multiple may be two, three, four or more, which are not limited by the present disclosure. In the embodiments of the present disclosure, technical features are distinguished by terms "first", "second", "third", "A", "B", "C" and "D", etc. The technical features described by the terms "first", "second", "third", "A", "B", "C" and "D" are not in an order of precedence or in an order of size.

The corresponding relationships shown in each table in the present disclosure can be configured or predefined. The values of the information in each table are only examples and can be configured as other values, which is not limited by the present disclosure. When the correspondence between information and each parameter is configured, it is not necessarily required to configure all the correspondences shown in each table. For example, in the table in the present disclosure, the correspondences shown in some rows may not be configured. For another example, appropriate form adjustments can be made based on the above table, such as splitting, merging, etc. The names of the parameters shown in the titles of the above tables may also be other names understandable by the communication device, and the values or expressions of the parameters may also be other values or expressions understandable by the communication device. When implementing the above tables, other data structures can also be used, such as array, queue, container, stack, linear list, pointer, linked list, tree, graph, structure, class, heap, distributed table or hash table.

The term "predefined" in the present disclosure may be understood as defined, pre-defined, stored, pre-stored, pre-negotiated, pre-configured, solidified, or pre-burnt.

Those of ordinary skill in the art will appreciate that the units and algorithm steps of each example described in conjunction with the embodiments disclosed herein can be implemented with electronic hardware, or a combination of computer software and electronic hardware. Whether these functions are performed in hardware or software depends on the specific application and design constraints of the technical solutions. Those of ordinary skill in the art may implement the described functions using different methods for each specific application, but such implementations should not be considered as exceeding the scope of the present disclosure.

Those of ordinary skill in the art can clearly understand that for the convenience and simplicity of description, reference may be made to the corresponding processes in the above method embodiments for the specific operating processes of the systems, devices and units described above, which will not be further provided herein.

The above descriptions are only specific embodiments of the present disclosure, but the protection scope of the present disclosure is not limited thereto. Any technician familiar with the technical field can easily think of changes or substitutions within the technical scope of in the present disclosure, all of which shall fall within the protection scope of the present disclosure. Therefore, the protection scope of the present disclosure is defined by the protection scope of the claims.

## Claims

1. A cell group updating method for a terminal in dual connectivity, performed by a source master node, MN, comprising:
transmitting a master cell group, MCG, change request message to one or more target MNs, wherein the MCG change request message is used to request the one or more target MNs to prepare resources for the terminal in dual connectivity.

2. The cell group updating method according to claim 1, wherein the MCG change request message is a handover request message.

3. The cell group updating method according to claim 1, wherein after the transmitting the master cell group, MCG, change request message to the one or more target MNs, the method further comprises: receiving a first feedback message transmitted by the one or more target MNs.

4. The cell group updating method according to claim 3, wherein the first feedback message is used to indicate any one of the following: MCG change preparation success, or MCG change preparation failure.

5. The cell group updating method according to any one of claims 1 to 4, wherein after the transmitting the master cell group, MCG, change request message to the one or more target MNs, the method further comprises: receiving a second feedback message carrying feedback information about secondary cell group, SCG, updating.

6. The cell group updating method according to claim 5, wherein the SCG updating comprises at least one of the following: SCG change, or SCG addition.

7. The cell group updating method according to claim 6, wherein the second feedback message is used to indicate at least one of the following:
MCG change preparation success, MCG change preparation failure, SCG change and/or addition preparation success, or, SCG change and/or addition preparation failure.

8. The cell group updating method according to any one of claims 3 to 7, wherein each of the first feedback message and the second feedback message is any one of the following: a handover request acknowledgement message, or a handover request failure message.

9. A cell group updating method for a terminal in dual connectivity, performed by a target master node, MN, comprising:
receiving a master cell group, MCG, change request message transmitted by a source MN, wherein the MCG change request message is used to request the target master node to prepare resources for the terminal in dual connectivity.

10. The cell group updating method according to claim 9, wherein the MCG change request message is a handover request message.

11. The cell group updating method according to claim 9, wherein after the receiving the master cell group, MCG, change request message transmitted by the source MN, the method further comprises: transmitting a first feedback message to the source MN.

12. The cell group updating method according to claim 11, wherein the first feedback message is used to indicate any one of the following: MCG change preparation success, or MCG change preparation failure.

13. The cell group updating method according to claim 9, wherein after the receiving the master cell group, MCG, change request message transmitted by the source MN, the method further comprises:
initiating a secondary cell group, SCG, updating process; and/or,
transmitting a secondary cell group, SCG, change request message and/or an SCG addition request message to one or more target secondary nodes, SN.

14. The cell group updating method according to claim 13, wherein the SCG change request is any one of the following: a secondary node, SN, addition request message, or an SN modification request message; and
wherein the SCG addition request is an SN addition request message.

15. The cell group updating method according to claim 13, further comprising:
receiving an SCG change feedback message and/or an SCG addition feedback message transmitted by the one or more target SNs.

16. The cell group updating method according to claim 15, wherein the SCG change feedback message comprises any one of the following: an SN addition request acknowledgement message, an SN modification request acknowledgement message, an SN addition request rejection message, or an SN modification request rejection message; and
wherein the SCG addition feedback message comprises any of the following: an SN addition request acknowledgement message, or an SN addition request rejection message.

17. The cell group updating method according to claim 15, wherein after the receiving an SCG change feedback message and/or an SCG addition feedback message transmitted by the one or more target SNs, the method further comprises:
transmitting a second feedback message carrying feedback information about SCG updating to the source MN.

18. The cell group updating method according to claim 17, wherein the second feedback message is used to indicate at least one of the following: MCG change preparation success, MCG change preparation failure, SCG change and/or addition preparation success, or, SCG change and/or addition preparation failure.

19. The cell group updating method according to any one of claims 9 to 18, further comprising:
determining an MCG based on the MCG change request message; or,
determining an MCG based on an implementation algorithm of the target MN.

20. The cell group updating method according to any one of claims 9 to 18, further comprising:
transmitting a data forwarding address to a source secondary node, SN, and/or the target SN.

21. A cell group updating method for a terminal in dual connectivity, performed by a target secondary node, SN, comprising:
receiving a secondary cell group, SCG, change request message and/or an SCG addition request message transmitted by a target master node, MN.

22. The cell group updating method according to claim 21, wherein
the SCG change request is any one of the following: a secondary node, SN, addition request message, or an SN modification request message; and
the SCG addition request is an SN addition request message.

23. The cell group updating method according to claim 21, further comprising: transmitting an SCG change feedback message and/or an SCG addition feedback message to the target MN.

24. The cell group updating method according to claim 23, wherein
the SCG change feedback message comprises any one of the following: an SN addition request acknowledgement message, an SN modification request acknowledgement message, an SN addition request rejection message, or an SN modification request rejection message; and
the SCG addition feedback message comprises any of the following: an SN addition request acknowledgement message, or an SN addition request rejection message.

25. The cell group updating method according to any one of claims 21 to 24, further comprising:
determining an SCG based on the SCG change request and/or the SCG addition request; or,
determining the SCG based on an implementation algorithm of the target SN.

26. A communication device, comprising:
a transceiver module, configured to transmit a master cell group, MCG, change request message to one or more target MNs, wherein the MCG change request message is used to request the one or more target MNs to prepare resources for a terminal in dual connectivity.

27. The communication device according to claim 26, wherein the MCG change request message is a handover request message.

28. The communication device according to claim 26, wherein the transceiver module is further configured to: receive a first feedback message transmitted by the one or more target MNs.

29. The communication device according to claim 28, wherein the first feedback message is used to indicate any one of the following: MCG change preparation success, or MCG change preparation failure.

30. The communication device according to any one of claims 26 to 29, wherein the transceiver module is further configured to: receive a second feedback message carrying feedback information about secondary cell group, SCG, updating.

31. The communication device according to claim 30, wherein the SCG updating comprises at least one of the following: SCG change, or SCG addition.

32. The communication device according to claim 31, wherein the second feedback message is used to indicate at least one of the following: MCG change preparation success, MCG change preparation failure, SCG change and/or addition preparation success, or, SCG change and/or addition preparation failure.

33. The communication device according to any one of claims 28 to 32, wherein each of the first feedback message and the second feedback message is any one of the following: a handover request acknowledgement message, or a handover request failure message.

34. A communication device, comprising:
a transceiver module, configured to receive a master cell group, MCG, change request message transmitted by a source MN, wherein the MCG change request message is used to request the target master node to prepare resources for a terminal in dual connectivity.

35. The communication device according to claim 34, wherein the MCG change request message is a handover request message.

36. The communication device according to claim 34, wherein the transceiver module is further configured to: transmit a first feedback message to the source MN.

37. The communication device according to claim 36, wherein the first feedback message is used to indicate any one of the following: MCG change preparation success, or MCG change preparation failure.

38. The communication device according to claim 34, further comprising a processing module configured to:
initiate a secondary cell group, SCG, updating process; and/or,
transmit a secondary cell group, SCG, change request message and/or an SCG addition request message to one or more target secondary nodes, SN.

39. The communication device according to claim 38, wherein the SCG change request is any one of the following: a secondary node, SN, addition request message, or an SN modification request message; and
wherein the SCG addition request is any one of the following: an SN addition request message.

40. The communication device according to claim 38, wherein the transceiver module is further configured to: receive an SCG change feedback message and/or an SCG addition feedback message transmitted by the one or more target SNs.

41. The communication device according to claim 40, wherein the SCG change feedback message comprises any one of the following: an SN addition request acknowledgement message, an SN modification request acknowledgement message, an SN addition request rejection message, or an SN modification request rejection message; and
wherein the SCG addition feedback message comprises any of the following: an SN addition request acknowledgement message, or an SN addition request rejection message.

42. The communication device according to claim 40, wherein the transceiver module is further configured to: transmit a second feedback message carrying feedback information about SCG updating to the source MN.

43. The communication device according to claim 42, wherein the second feedback message is used to indicate at least one of the following: MCG change preparation success, MCG change preparation failure, SCG change and/or addition preparation success, or, SCG change and/or addition preparation failure.

44. The communication device according to any one of claims 34 to 43, wherein the processing module is further configured to:
determine an MCG based on the MCG change request message; or,
determine an MCG based on an implementation algorithm of the target MN.

45. The communication device according to any one of claims 34 to 43, wherein the transceiver module is further configured to: transmit a data forwarding address to a source secondary node, SN, and/or the target SN.

46. A communication device, comprising:
a transceiver module, configured to receive a secondary cell group, SCG, change request message and/or an SCG addition request message transmitted by a target master node, MN.

47. The communication device according to claim 46, wherein
the SCG change request is any one of the following: a secondary node, SN, addition request message, or an SN modification request message; and
the SCG addition request is an SN addition request message.

48. The communication device according to claim 46, wherein the transceiver module is further configured to: transmit an SCG change feedback message and/or an SCG addition feedback message to the target MN.

49. The communication device according to claim 48, wherein
the SCG change feedback message comprises any one of the following: an SN addition request acknowledgement message, an SN modification request acknowledgement message, an SN addition request rejection message, or an SN modification request rejection message; and
the SCG addition feedback message comprises any of the following: an SN addition request acknowledgement message, or an SN addition request rejection message.

50. The communication device according to any one of claims 46 to 49, further comprising a processing module configured to:
determine an SCG based on the SCG change request and/or the SCG addition request; or,
determine an SCG based on an implementation algorithm of the target SN.

51. A cell group updating method for a terminal in dual connectivity, comprising:
transmitting, by a source master node, MN, a master cell group, MCG, change request message to one or more target MNs, wherein the MCG change request message is used to request the one or more target MNs to prepare resources for the terminal in dual connectivity; and
transmitting, by the one or more target MNs, a feedback message to the source MN.

52. The cell group updating method according to claim 51, wherein after the transmitting, by the source master node, MN, the master cell group, MCG, change request message to the one or more target MNs, the method further comprises:
transmitting, by the target MN, a secondary cell group, SCG, change request message and/or an SCG addition request message to one or more target secondary nodes, SN; and
transmitting, by the one or more target SNs, an SCG change feedback message and/or an SCG addition feedback message to the target MN.

53. A communication device, comprising a processor and a memory, wherein the memory is configured to store a computer program, and the processor is configured to execute the computer program stored in the memory to cause the communication device to perform the method according to any one of claims 1 to 8, or perform the method according to any one of claims 9 to 20, or perform the method according to any one of claims 21 to 25.

54. A computer readable storage medium, configured to store instructions, wherein the instructions is executed to implement the method according to any one of claims 1 to 8, or the method according to any one of claims 9 to 20, or the method according to any one of claims 21 to 25.
